# EUROPEAN PATENT APPLICATION

(11) **EP 4 224 791 A1**
(43) Date of publication of application: **09.08.2023**
(21) Application number: 23154581.5
(22) Date of filing: 02.02.2023
(51) Int. Cl.: H04L 9/40, G06N 20/00

(54) **SECURITY IN COMMUNICATION NETWORKS**

(30) Priority: 04.02.2022 FI 20225102
(71) Applicant: Nokia Solutions and Networks Oy, 02610 Espoo (FI)
(72) Inventor: MONSHIZADEH, Mehrnoosh, Saint Germain les Arpajon (FR); KHATRI, Vikramajeet, Espoo (FI); GAMDOU, Marah, Longjumeau (FR)
(74) Representative: Nokia EPO representatives

(57) **Abstract**

According to an example aspect of the present invention, there is provided an apparatus, comprising means for performing, receiving input data comprising data points, applying N initial clustering algorithms at least to a subset of said data points to generate N initial clustering matrices, generating a co-association matrix from the N initial clustering matrices, generating a distance matrix from the co-association matrix, applying a density based clustering algorithm to the distance matrix to generate data clusters, determining a subset of the generated data clusters as anomalous clusters, wherein at least some of the data points in each anomalous cluster are anomalous data points and performing at least one action based on the anomalous clusters.

## Description

### FIELD

Various example embodiments relate in general to communication networks and more specifically, to security in such systems.

### BACKGROUND

Security is important in various communications in general, such as in cellular communication systems, like in 5G networks developed by the 3rd Generation Partnership Project, 3GPP. The 3GPP still develops 5G networks and there is a need to provide improved methods, apparatuses and computer programs for enhancing security of 5G networks. Such enhancements may be exploited in other cellular communication networks as well. For example, such enhancements may be exploited in 6G networks in the future.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided an apparatus comprising at least one processing core, at least one memory including computer program code, the at least one memory and the computer program code being configured to, with the at least one processing core, cause the apparatus at least to perform, receive input data comprising data points, apply *N* initial clustering algorithms at least to a subset of said data points to generate *N* initial clustering matrices, generate a co-association matrix from the *N* initial clustering matrices, generate a distance matrix from the co-association matrix, apply a density based clustering algorithm to the distance matrix to generate data clusters, determine a subset of the generated data clusters as anomalous clusters, wherein at least some of the data points in each anomalous cluster are anomalous data points and perform at least one action based on the anomalous clusters.

According to a second aspect, there is provided a method comprising, receiving input data comprising data points, applying N initial clustering algorithms at least to a subset of said data points to generate N initial clustering matrices, generating a co-association matrix from the N initial clustering matrices, generating a distance matrix from the co-association matrix, applying a density based clustering algorithm to the distance matrix to generate data clusters, determining a subset of the generated data clusters as anomalous clusters, wherein at least some of the data points in each anomalous cluster are anomalous data points and performing at least one action based on the anomalous clusters.

According to a third aspect of the present invention, there is provided an apparatus comprising means for performing, receiving input data comprising data points, applying N initial clustering algorithms at least to a subset of said data points to generate N initial clustering matrices, generating a co-association matrix from the N initial clustering matrices, generating a distance matrix from the co-association matrix, applying a density based clustering algorithm to the distance matrix to generate data clusters, determining a subset of the generated data clusters as anomalous clusters, wherein at least some of the data points in each anomalous cluster are anomalous data points and performing at least one action based on the anomalous clusters.

According to some aspects of the present invention, there is provided non-transitory computer readable medium having stored thereon a set of computer readable instructions that, when executed by at least one processor, cause an apparatus to at least perform the method. According to some aspects of the present invention, there is provided a computer program comprising instructions which, when the program is executed by an apparatus, cause the apparatus to carry out the method.

### BRIEF DESCRIPTION OF THE DRAWINGS

FIGURE 1 illustrates a network scenario in accordance with at least some example embodiments;
FIGURE 2 illustrates an architecture in accordance with at least some example embodiments;
FIGURE 3 illustrates generation of a co-association matrix in accordance with at least some example embodiments;
FIGURE 4 illustrates generation of a distance matrix in accordance with at least some example embodiments;
FIGURE 5 illustrates an example apparatus capable of supporting at least some example embodiments; and
FIGURE 6 illustrates a flow graph of a method in accordance with at least some example embodiments;
FIGURE 7 illustrates generation a flowchart in accordance with at least some example embodiments.

### EMBODIMENTS

Embodiments of the present invention provide security enhancements for communication networks. More specifically, embodiments of the present invention enhance security of communication networks by utilizing several initial clustering algorithms, such as unsupervised clustering algorithms, in conjunction with a density-based clustering algorithm to categorize incoming data into various data clusters. Anomalous clusters comprising at least anomalous data points may be thus determined based on the data clusters, e.g., by an intrusion detection apparatus which may then perform actions accordingly.

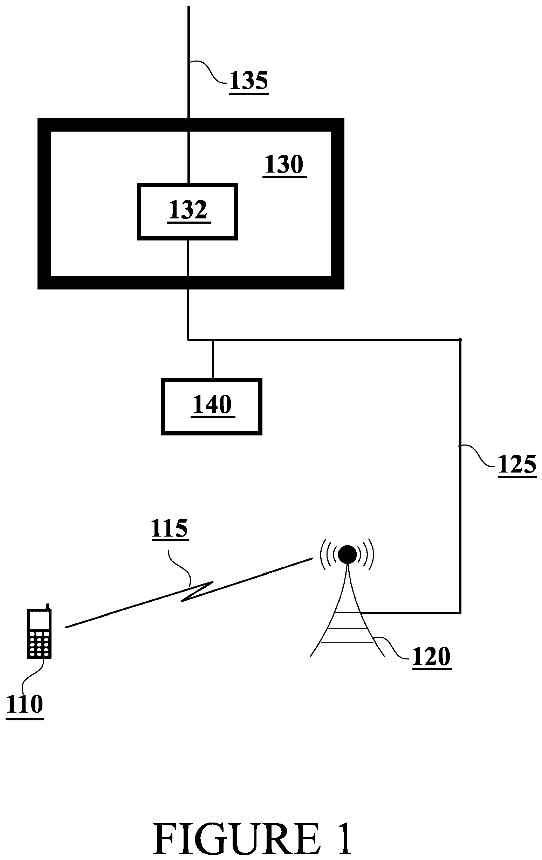

FIGURE 1 illustrates an exemplary network scenario in accordance with at least some example embodiments. According to the example scenario of FIGURE 1, there may be a communication network, which comprises wireless terminal 110, wireless network node 120, and core network 130. Core network 130 may further comprise apparatus 132, like an intrusion detection apparatus. In some example embodiments, apparatus 132 may not be in core network 130 though. Apparatus 132 may be a part of wireless network node 120, or located between wireless network node 120 and core network 130.

In some embodiments, apparatus 132 may be outside of the communication network shown in FIGURE 1. That is, embodiments of the present invention may be exploited in other communication systems as well and the cellular communication network is merely used as an example. The communication network may also comprise another apparatus 140, like an intruder. Another apparatus 140 may transmit packets in, or to, the communication network. The packets may comprise unknown traffic and apparatus 132 may further analyze said packets upon reception.

Wireless terminal 110 may comprise, for example, User Equipment, UE, a smartphone, a cellular phone, a Machine-to-Machine, M2M, node, Machine-Type Communications node, MTC, an Internet of Things, IoT, node, a car telemetry unit, a laptop computer, a tablet computer or, indeed, any suitable wireless terminal. In the example of FIGURE 1, wireless terminal 110 may communicate wirelessly with wireless network node 120, or with a cell of wireless network node 120, via air interface 115.

Wireless terminal 110 may be connected to wireless network node 120 via air interface 115. Air interface 115 between wireless terminal 110 and wireless network node 120 may be configured in accordance with a Radio Access Technology, RAT, which wireless terminal 110 and wireless network node 120 are configured to support.

Examples of cellular RATs comprise Long Term Evolution, LTE, New Radio, NR, which may also be known as fifth generation, 5G, radio access technology and MulteFire. In case of cellular RATs, wireless terminal 110 may be referred to as a UE and wireless network node 120 may be referred to as a Base Station, BS. For example, in the context of LTE, wireless network node 120 may be referred to as eNB while in the context of NR, wireless network node 120 may be referred to as gNB. Examples of non-cellular RATs comprise Wireless Local Area Network, WLAN, and Worldwide Interoperability for Microwave Access, WiMAX. In case of non-cellular RATs, wireless terminal 110 may be referred to as a wireless client and wireless network node 120 may be referred to as a an access point.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

Adversarial attacks on, e.g., Artificial Intelligence, AI, systems may be, or become, a major security concern for various communication networks, such as cellular communication networks, like 5G networks or 6G networks in the future. Moving toward an intelligent network may require utilizing AI as an essential component in the architecture, products, and services.

However, in such intelligent networks, AI may not be only an enabler, but AI may be employed by attackers as offender to launch intelligent attacks, e.g., using anomalous data points. AI-driven attacks may operate at scale and become stealthier. Due to the adaptable structure of AI systems, it may be possible to switch between attack techniques and easily bypass defense mechanism(s). Hence, mitigating these attacks requires more intelligent defence systems empowered by AI methods that in real time and with minimum human interaction detect the malicious input.

For example, in the field of machine learning, analysis of unknown data may be one challenge. If a considerable amount of incoming data is unknown and does not belong to any known attack type, it may lead to high false positive and negative ratios when the data is categorized.

Annotating large datasets may be very costly and hence, in practice only a few examples may be labelled, i.e., categorized, manually. In addition, for unknown, anomalous traffic, it may be challenging to divide data into the classes without having information on the nature of the incoming data. Therefore, clustering methods may be exploited to gain some insight about the structure of the incoming data. Clusters may appear with different sizes, shapes, data sparseness, and overlapping degrees though, and thus it would be desirable to be able to identify all the cluster forms and structures encountered in real-life scenarios, e.g., for intrusion detection. In addition, at least in case of intrusion detection it would be good to avoid low detection rates in case of unknown attacks.

If unsupervised machine learning algorithms (e.g., clustering algorithms), which may not require labelled data during training, are used to analyze unknown, non-labelled incoming data, challenges may be faced as firstly, for majority of clustering algorithms, the number of clusters must be defined in advance, whereas for unknown, anomalous data number of clusters cannot be defined in advance; secondly clusters may appear with different shapes, sizes, data sparseness, and overlapping degree. Therefore, it may be difficult to select an algorithm that fits the best for a particular dataset but to tune various parameters of the selected algorithm.

Embodiments of the present invention therefore enable an unsupervised approach that combines multiple clustering algorithms, that may be performed automatically and used in real-time to define the best number of clusters for analyzing unknown, non-labelled and anomalous data, to enable efficient categorization of data into clusters, which may be further used to detect malicious, anomalous clusters and hence attack packets which can be used to enhance machine learning process.

More specifically, embodiments of the present invention enable utilization of several clustering algorithms, like unsupervised clustering algorithm, in conjunction with a density based clustering algorithm, such as Density-Based Spatial Clustering of Applications with Noise, DBSCAN, to categorize unknown traffic into various clusters in real-time and further into malicious clusters.

In general, if two packets belong to the same attack type, i.e., anomalous cluster, it may be more likely that they fall into the same cluster when any clustering algorithm is applied with any parameters. So if multiple clustering algorithms are applied, the more often said two packets fall into the same cluster, the more likely it is that such packets may belong to the same attack type. A co-association matrix may be generated and given a set of packets of input data, comprising data points. A distance matrix may be calculated based on the co-association matrix, wherein the distance matrix may comprise distance measures between said data points.

The distance matrix may be then used for further density-based clustering, like DBSCAN clustering, to generate various clusters and a malicious, anomalous cluster may be determined for each data point from the generated clusters. For instance, one cluster may correspond to one or more attack type or even unknown and benign. The decision whether a cluster is malicious and anomalous may be made based on type of the majority of packets in the cluster either by an algorithm or by security investigator. That is, a subset of data clusters may be determined, wherein the data points in each data cluster of the subset may be anomalous data points, like unknown, non-labelled data points. The subset of data clusters may not comprise data points that are known.

At least one action may be performed based on the categories of the data points. For instance, The output of density-based clustering algorithm, may be provided in a table that depicts the number of packets in each cluster distributed according to various attack types. The clusters that contain less than a threshold packets may be discarded. For the rest of the clusters and for decreasing requirements on computation resources, the packet numbers may be converted to percentage (of total number). For example, if a cluster contains 1000 packets in which 100 packets are of type 1, and 300 packets of type 2, these numbers may be converted to 10%T1 and 30%T2. With a voting mechanism, like a Generalized Boyer-Moore Majority Vote Algorithm, only types with high percentage may be analyzed further.

An attack type for a data point representing a network packet can be determined based on definitions on the following attributes of network packets, wherein the definitions may be provided as predetermined values and value ranges, or provided in more generalized form as an executable script: packet size, origin of the packets and/or time stamp in relation to the origin of generated packets.

The use of a density-based clustering algorithm, like DBSCAN, makes it possible to find clusters in any shape, as long as the elements, i.e., data points, are density connected. For instance, a point p and q may be density connected if there exists a point r which has sufficient number of points in its neighbours and both points p and q are within epsilon (ε) distance. This is important at least when dealing with a clustering problem of unknown incoming data, like unknown protocol messages or anomalous data points, because the shape of clusters may be uncertain. The density-based clustering algorithm further enables automation of the process with a minimum human interaction, thereby enabling real-time analysis.

If the number of clusters would need to be defined in advance for multi clustering, it would make real time analysis impossible. As there may be unknown traffic, the number of clusters cannot be defined in advance. In some embodiments, the multi clustering may be used once in a training process and later on the density-based clustering algorithm, like DBSCAN, may be exploited to define the cluster numbers automatically. Hence, automation is enabled, which is necessary for real-time analysis, but also the performance is improved by making manual cluster definition and model tuning unnecessary.

Embodiments of the present invention may be exploited to achieve a good silhouette score regardless of nature of the applied dataset, i.e., the incoming data, and overall, an efficient solution is provided that in real-time clusters unknown, anomalous traffic with several characteristics.

In some example embodiments, the density-based clustering algorithm, named for example as Associated Density Based Clustering, ADBC, may be applied with multiple unsupervised algorithms and a co-association matrix to categorize unknown data into different clusters in real-time. The density-based clustering algorithm may be exploited for various datasets with diverse attacks, to achieve a good homogeneity, meaning that each cluster contains mainly members of a single class, and a very high silhouette coefficient score, meaning that clusters in the space of the co-association matrix are well defined and have a minimum of overlapping.

The co-association matrix may be derived for determining a similarity metric, like a distance metric, but which is different from Euclidean distance. In other words, there may be a feature space where the distance between data points reflects the similarity between packets, and the data points, which is not always the case for Euclidean distance.

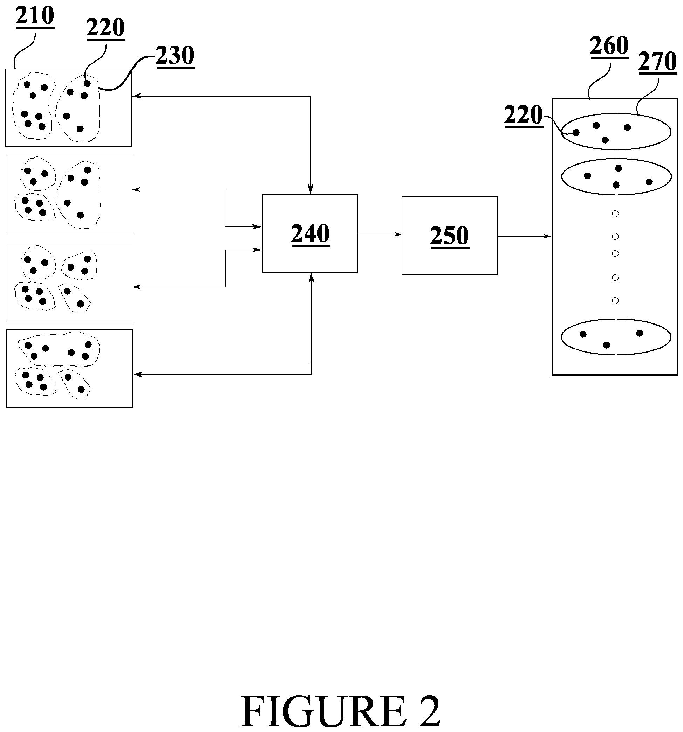

FIGURE 2 illustrates an architecture in accordance with at least some example embodiments. More specifically, in the architecture shown in FIGURE 2, N different clustering algorithms 210 may be applied to a subset of input data, wherein said input data comprises data points 220, to generate N sets of clusters, wherein each set comprises at least two clusters 230. The benefit of applying N different clustering algorithms 210 is to solve overlapping between clusters. If a density-based clustering algorithm, alone would be used to generate clusters automatically, the generated clusters would overlap. The overlapping happens when datapoints have the same closest distance to more than one cluster center. The multi clustering solves this problem with distinction of the distance to cluster centers for data points. The use of a single clustering algorithm may not be sufficient nor stable, because the result may vary a lot with minor changes in the hyperparameters or the input data. For instance, apparatus 132 may apply, upon receiving data points 220, N clustering algorithms 210 to at least to a subset of data points 220 to generate N clustering matrices 230.

Applied clustering algorithms 210, comprising at least a first clustering algorithm and a second clustering algorithm, may be different or have different parameters. That is, the first clustering algorithm may be different than the second clustering algorithm. Alternatively, the first clustering algorithm may be the same as the second clustering algorithm and the first clustering algorithm may have at least one different parameter than the second clustering algorithm, like different hyperparameters or initializations. In general, the applied clustering algorithms may be unsupervised clustering algorithms. For instance, the same clustering algorithm k-means may be applied with different numbers of clusters. In other words, k-means algorithm may be applied with several values for hyperparameters to create different clusterings.

Co-association matrix 240 may be generated based on the *N* clustering matrices. The co-association matrix may be a combination of the *N* clustering matrices, i.e., a combination of the obtained *N* clustering sets comprising clusters 220. In some embodiments, co-association matrix 240 may be generated by calculating a mean of each corresponding element of the *N* clustering matrices.

The distance represented in distance matrix 250 may be different from the Euclidean distance, as the Euclidean distance may not reflect the similarity between packets in real scenarios. In some embodiments, the distance represented in distance matrix 250 may be related to a number representing how many times two packets, or data points fall into the same cluster. For instance, if two packets, or data points, fall into the same cluster many times when several clustering algorithms are applied, it may be likely that the packets, or data points, are similar and may be likely that those belong to the same attack cluster. The combination process that is used to obtain the co-association matrix may be based on weight mechanism, wherein weights may vary between 0 and 1.

Distance matrix 250 may represent the input data points in a feature space, wherein a distance between two data points is a measure of similarity. Distance matrix 250 may be generated from co-association matrix 240, e.g., by subtracting a value of each element of the co-association matrix from 1.

Then, a density based clustering algorithm 260, like DBSCAN, may be applied to distance matrix 250 to generate distinct clusters 270, wherein generated clusters 270 comprise data points 220. Density based clustering algorithm 260 may be hence applied directly to distance matrix 250 to determine distinct data clusters 270 for each data point 220. Consequently, a malicious, anomalous cluster of each data point 220 may be determined from clusters 270. At least some of the data points in each anomalous cluster may be anomalous data points

The clusters 270 may be generalized to the whole datapoints and analyzed by a security investigator (human or an algorithm) in order to identify malicious points based on the cluster composition.

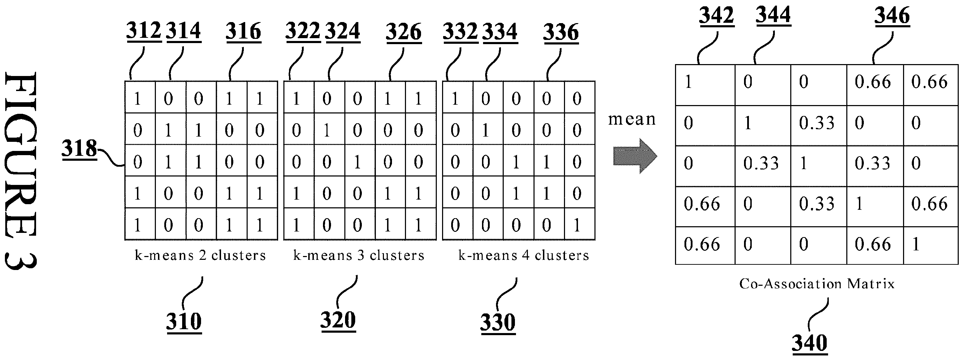

FIGURE 3 illustrates a generation of a co-association matrix in accordance with at least some example embodiments. More specifically, FIGURE 3 illustrates first clustering matrix 310 generated using a first clustering algorithm (k-means with 2 clusters), second clustering matrix 320 generated using a second clustering algorithm (k-means with 3 clusters) and third clustering matrix 330 generated using a third clustering algorithm (k-means with 4 clusters).

Each element of a clustering matrix denotes whether data points associated with said element are in the same cluster. That is, each element of a clustering matrix denotes whether data points of said element are in the same cluster. For instance, first element 312 of first clustering matrix 310 denotes that the first data point is in the same cluster as the first data point in first clustering matrix 310 generated using the first clustering algorithm. Second element 314 of first clustering matrix 310 denotes whether the second data point is in the same cluster as the first data point in first clustering matrix 310 generated using the first clustering algorithm. In the example of FIGURE 3, the second data point is not in the same cluster as the first data point in first clustering matrix 310.

Similarly, fourth element 316 of first clustering matrix 310 denotes whether the fourth data point is in the same cluster as the first data point in first clustering matrix 310 generated using the first clustering algorithm. In the example of FIGURE 3, the fourth data point is in the same cluster as the first data point in first clustering matrix 310. Third element 318 of first clustering matrix 310 denotes whether the first data point is in the same cluster as the third data point in first clustering matrix 310. In the example of FIGURE 3, the first data point is not in the same cluster as the third data point in first clustering matrix 310.

First element 322 of second clustering matrix 320 denotes that the first data point is in the same cluster as the first data point in second clustering matrix 320, second element 324 of second clustering matrix 320 denotes the second data point is not in the same cluster as the first data point in second clustering matrix 310 and fourth element 326 of second clustering matrix 320 denotes that the fourth data point is in the same cluster as the first data point in second clustering matrix 320.

First element 332 of third clustering matrix 330 denotes that the first data point is in the same cluster as the first data point in third clustering matrix 330, second element 334 of third clustering matrix 330 denotes that the second data point is not in the same cluster as the first data point in third clustering matrix 330 and fourth element 336 of third clustering matrix 330 denotes that the fourth data point is not in the same cluster as the first data point in third clustering matrix 330.

Co-association matrix 340, which may correspond to co-association matrix 240 of FIGURE 2, may then be generated by calculating a mean of each corresponding element of the N clustering matrices, i.e., a mean of each corresponding element of first clustering matrix 310, second clustering matrix 320 and third clustering matrix 330. For instance, first element 342 of co-association matrix 340 denotes a mean of first element 312 of first clustering matrix 310, first element 322 of second clustering matrix 320 and first element 332 of third clustering matrix 330.

Similarly, second element 344 of co-association matrix 340 denotes a mean of second element 314 of first clustering matrix 310, second element 324 of second clustering matrix 320 and second element 334 of third clustering matrix 330. Fourth element 346 of co-association matrix 340 denotes a mean of fourth element 316 of first clustering matrix 310, fourth element 326 of second clustering matrix 320 and fourth element 336 of third clustering matrix 330. The distance matrix may be then generated from co-association matrix 340.

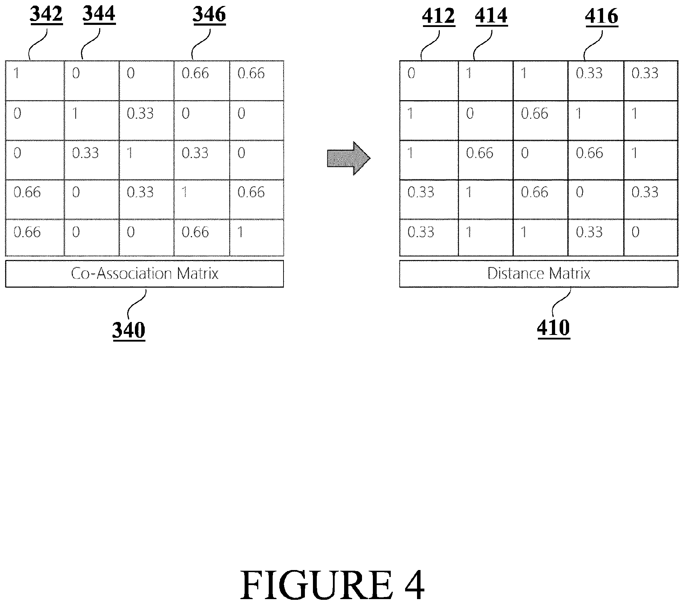

FIGURE 4 illustrates generation of a distance matrix in accordance with at least some example embodiments. As shown in FIGURE 4, distance matrix 510 may be generated from the co-association matrix by subtracting a value of each element of co-association matrix 340 from 1. For instance, first element 342 of co-association matrix 340 may be subtracted from 1 to determine a value of first element 412 of distance matrix 410, second element 344 of co-association matrix 340 may be subtracted from 1 to determine a value of second element 414 of distance matrix 410 and fourth element 346 of co-association matrix 340 may be subtracted from 1 to determine a value of third element 416 of distance matrix 410.

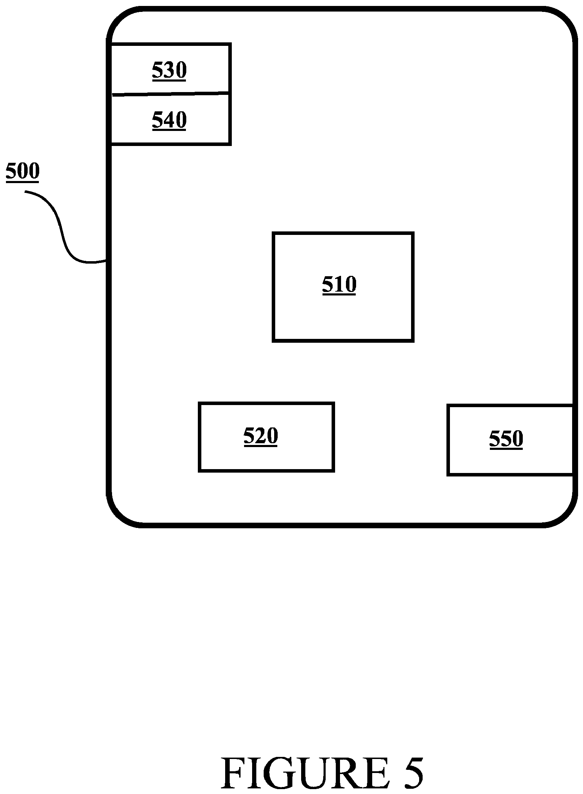

FIGURE 5 illustrates an example apparatus capable of supporting at least some example embodiments. Illustrated is device 500, which may comprise, for example, apparatus 132 of FIGURE 1, or a device controlling functioning thereof. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. Processor 510 may comprise at least one Application-Specific Integrated Circuit, ASIC. Processor 510 may comprise at least one Field-Programmable Gate Array, FPGA. Processor 510 may comprise an Intel Xeon processor for example. Processor 510 may be means for performing method steps in device 500, such as determining, causing transmitting and causing receiving. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular standard, such as a standard defined by the 3rd Generation Partnership Project, 3GPP. Transmitter 530 may comprise more than one transmitter. Receiver 540 may comprise more than one receiver. Transmitter 530 and/or receiver 540 may be configured to operate in accordance with Global System for Mobile communication, GSM, Wideband Code Division Multiple Access, WCDMA, Long Term Evolution, LTE, and/or 5G standards, for example.

Device 500 may comprise User Interface, UI, 550. UI 550 may comprise at least one of a display, a keyboard, a touchscreen, a vibrator arranged to signal to a user by causing device 500 to vibrate, a speakeror a microphone. A user may be able to operate device 500 via UI 550, for example to configure device 500 and/or functions it runs.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIGURE 4. In some example embodiments, device 500 lacks at least one device described above. For example, device 500 may not have UI 550.

Processor 510, memory 520, transmitter 530, receiver 540 and/or UI 550 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the example embodiment various ways of interconnecting at least two of the aforementioned devices may be selected without departing from the scope of the present invention.

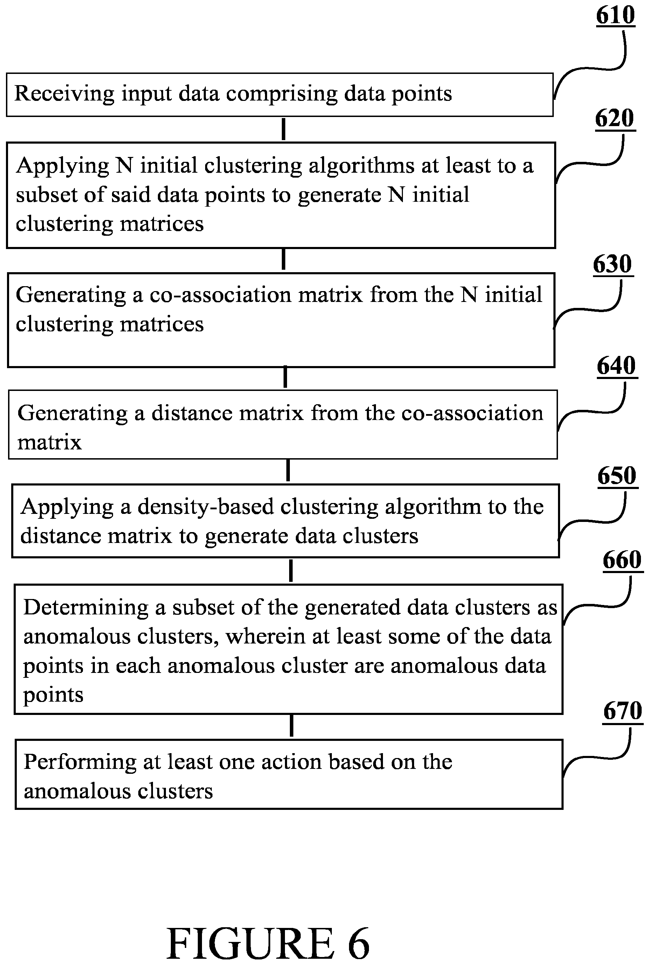

FIGURE 6 is a flow graph of a method in accordance with at least some embodiments. The method may be for, and/or performed by, an apparatus, like apparatus 132 of FIGURE 1, or a device controlling functioning thereof.

The method may comprise, at step 610, receiving input data comprising data points. Said input data may be received from another apparatus, like apparatus 140 of FIGURE 1, via at least one communication interface, i.e., link, such as interface 115, interface 125 and/or interface 135 of FIGURE 1.

At step 620, the method may comprise applying *N* initial clustering algorithms at least to a subset of said data points to generate *N* initial clustering matrices. Each element of the *N* initial clustering matrices may denote whether data points associated with said element are in the same initial cluster. With reference to FIGURE 3, for example fourth element 316 of first clustering matrix 310 may denote whether the fourth data point is in the same cluster as the first data point in first clustering matrix 310.

In some example embodiments, the *N* initial clustering algorithms may be different. At least two of the *N* initial clustering algorithms may be the same and the at least two of the *N* initial clustering algorithms may have at least one different parameter. The *N* initial clustering algorithms may be unsupervised clustering algorithms.

At step 630, the method may comprise generating a co-association matrix, wherein the co-association matrix is a combination of the *N* initial clustering matrices. The co-association matrix may be generated by calculating a mean of each corresponding element of the *N* initial clustering matrices. With reference to FIGURE 3 again, fourth element 346 of co-association matrix 340 may be determined by calculating a mean of fourth element 316 of first clustering matrix 310, fourth element 326 of second clustering matrix 320 and fourth element 336 of third clustering matrix 330.

At step 640, the method may comprise generating a distance matrix from the co-association matrix. The distance matrix may be generated from the co-association matrix by subtracting a value of each element of the co-association matrix from 1. With reference to FIGURE 4, for example fourth element 416 of distance matrix 410 may be determined by subtracting a value of fourth element 346 of co-association matrix 340 from 1.

At step 650, the method may comprise applying a density based clustering algorithm to the distance matrix to generate attack clusters. In some example embodiments, the density-based clustering algorithm may be a Density-Based Spatial Clustering of Applications with Noise, DBSCAN. Embodiments of the present invention are not limited to any specific density-based clustering algorithm though, and may be applied by using any suitable algorithm such as DBSCAN, Ordering Points to Identify the Clustering Structure, OPTICS or Shared Nearest Neighbor, SNN. DBSCAN may be exploited to provide the best performance.

At step 660, the method may comprise determining a subset of the generated data clusters as anomalous clusters, wherein at least some of the data points in each anomalous cluster are anomalous data points. For instance, the attack type of each data point may be determined by checking to which anomalous cluster each data point belongs to. Each anomalous data point may belong to one malicious, anomalous cluster and thus be associated with a corresponding attack type, but one cluster may comprise multiple data points and hence one attack type may be associated with multiple data points as well. The attack type of each data point may be therefore based on elements of the *N* initial matrices corresponding to said data point, said elements comprising information about initial clusters of said data point, like whether said data point is in the same cluster as another data point(s).

In some example embodiments, the method may further comprise determining that an anomalous cluster, and an attack category, of one data point is the same as an anomalous cluster of another data point upon determining that an initial cluster of said one data point is the same as an initial cluster of said another data point. With reference to FIGURE 3 again, it may be determined for example that since the first and fourth data point are in the same cluster according to element 316 of first clustering matrix 310, it is likely that the first and fourth data point are in the same attack category. Furthermore, the first and fourth data point are in the same cluster according to element 326 of second clustering matrix 320 and hence, it is even more likely that the first and fourth data points are in the same attack category.

In some example embodiments, the method may further comprise determining that a data cluster of one data point is the same as a data cluster a of another data point upon determining that an initial cluster of said one data point is the same as an initial cluster of said another data point. It may be determined for example that since the first and second data points are not in the same cluster according to element 314 of first clustering matrix 310, it is likely that the first and second data points are not in the same attack category. Furthermore, the first and second data points are not in the same cluster according to element 324 of second clustering matrix 320 and hence, it is even more likely that the first and fourth data points are not in the same attack category.

Finally, at step 670, the method may comprise performing at least one action based on the anomalous clusters, wherein the at least one action may comprise for example detecting malicious clusters and hence attack packets which can be used to enhance machine learning process, and/or to configure interface 135 to drop packets having the same source address as in any of the data points representing packets comprised in malicious clusters.

In some example embodiments, said performing the at least one action based on the anomalous clusters may comprise providing data points of at least one of the anomalous clusters to a human operator and/or to an algorithm for further analysis. For instance, said providing the data points of at least one of the anomalous clusters to the human operator may comprise presenting the anomalous clusters and/or the anomalous data points on a Graphical User Interface, GUI. Each data point may correspond to properties of a network packet in received network traffic, and each anomalous cluster comprises unknown network traffic.

Moreover, said further analysis by the algorithm may comprise determining for each anomalous cluster of unknown network traffic, whether said anomalous cluster comprises data points associated with a network attack or not. Said determining may comprises performing for each anomalous cluster of unknown network traffic, determining an attack type for each data point in an anomalous cluster, wherein the attack type is either a type of malicious network traffic or none for benign network traffic, determining a number of data points corresponding to each attack type, determining an attack type with a highest number of data points as a majority attack type and determining that the anomalous cluster is a network attack cluster in response to the majority attack type being of some other type than none.

At least one definition of an attack type may be pre-defined and stored to the apparatus, wherein determining an attack type for each data point in an anomalous cluster may comprise comparing a data point to the at least one stored definition of an attack type, wherein an attack type other than none may be determined in response to finding a matching comparison between the data point and a definition of an attack type, wherein an attack type of none may be determined in response to not finding a matching comparison between the data point and any of the stored definitions of an attack type and wherein the definition of an attack type may comprise values or value ranges for at least one of the following parameters:
a. source Internet Protocol, IP, address;
b. destination IP address;
c. IP packet size;
d. destination Transmission Control Protocol, TCP, port number;
e. destination User Datagram Protocol, UDP, port number; or
f. inter-packet interval of IP packets received from the same source IP address.

The inter-packet interval may be measured in microseconds as a rolling average over the latest 5, 50 or 100 packets received from the same IP address. The parameters in the definition of an attack type may be provided in an executable script, and wherein comparing a data point to the definition of an attack type may be performed by executing the script. The definitions of attack types stored to the apparatus may be periodically updated by adding new attack types, removing attack types and/or changing the parameters of attack types. Determining the number of data points corresponding to each attack type may comprise using a voting algorithm for filtering out attack types of a lower proportion than a threshold value. For example, Generalized Boyer-Moore Majority Vote algorithm can be used as the voting algorithm.

Said performing the at least one action based on the anomalous clusters may comprise dropping packets coming from a same source address as packets comprising data points of the anomalous clusters determined as network attack clusters. Said performing the at least one action based on the anomalous clusters may comprise dropping packets having a same size as packets comprising data points of the anomalous clusters determined as network attack clusters.

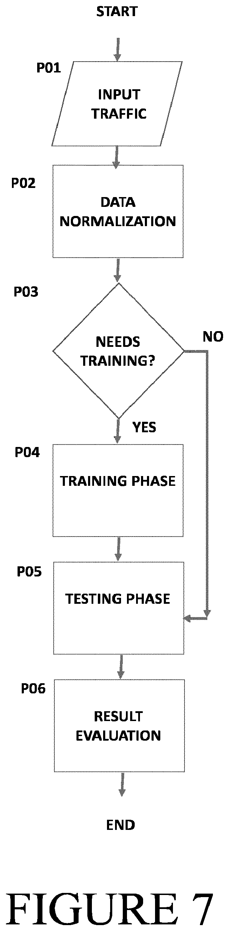

FIGURE 7 illustrates generation a flowchart in accordance with at least some example embodiments. The malicious clusters/attacks datapoints may be identified based on some definitions that can be further generalized in a script, such as based on packet size, based on the origin of the packets and/or based on the time stamp in relation to the origin of the packets.

The detected attack packets may be fed, automatically, into the architecture for training purposes. The architecture may be trained periodically with new packets after a time threshold, e.g., monthly. The threshold time for training process may be defined based on the computation requirements (e.g., monthly).

For example, the architecture may be trained for mobile network application with a publicly available network traffic dataset, such as MAWILab-2018. Traffic in these datasets may be classified into normal, unknown and attack (n classes of attacks). Packets that do not have any label in the dataset may be presented as unknown.

Prior to the training, several processes may be done on the mentioned datasets. Data cleaning, converting the columns to the right types, handling missing values, splitting IP addresses into four fields, vectorizing categorical variables, normalizing the dataset, changing the labels of attack categories in order to differentiate different attack categories are carried out in the dataset preprocessing phase.

For the normalization, statistical and scaling normalization may be used. In order to improve the performance of the algorithms, numeric attributes may be transformed into nominal attributes. In addition, the IP addresses and hexadecimal Medium Access Control, MAC, addresses of the applied datasets may be transformed into separate numeric attributes. Each numeric attribute may be normalized using batch mean and standard deviation unless there is an already defined range (e.g., IP address range).

After data normalization, a determination may be made at process P03 to determine whether the ADBC architecture has previously undergone training by input packets. If no training has been previously done, then training may be needed and the flow chart may proceed to process P04 where the ADBC architecture undergoes training. Such training may involve DBSCAN algorithms. Likewise, if the algorithm has already been trained, but the training took place outside a predefined time window or after a predefined amount of data, then the flow chart may proceed to process P04 where the DBSCAN undergoes retraining to ensure it can handle data properly. The time window and the amount of data may be selected by a user based on the particular application. If it is determined at process P03 that no training is needed, then the flow chart proceeds to process P05 where the architecture ADBC undergoes testing using test data. Thereafter, the results of the testing may be evaluated at process P06 to confirm the effectiveness and efficiency of the training from process P04.

In some example embodiments, for mobile network (with network traffic) application, a publicly available network traffic dataset, such as MAWILab-2018 (http://www.fukuda-lab.org/mawilab/v1.1/) may be applied to train all algorithms. The threshold time for training process may be defined based on the computation requirements (e.g., monthly). Furthermore, data cleaning, converting the columns to the right types, handling missing values, splitting IP addresses into four fields, vectorizing categorical variables, normalizing the dataset, changing the labels of attack categories in order to differentiate different attack categories may be carried out in the dataset preprocessing phase. For the normalization, statistical and scaling normalization may be used. In order to improve the performance of the algorithms, numeric attributes are transformed into nominal attributes. In addition, the IP addresses and hexadecimal Medium Access Control, MAC, addresses of the applied datasets may be transformed into separate numeric attributes. Each numeric attribute may be normalized using batch mean and standard deviation unless there is an already defined range (e.g., IP address range).

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an example embodiment, an apparatus, like apparatus 132 of FIGURE 1, or a device controlling functioning thereof, may comprise means for carrying out the embodiments described above and any combination thereof.

In an example embodiment, a computer program comprising instructions which, when the program is executed by an apparatus, may cause the apparatus to carry out the first method or the second method.in accordance with the embodiments described above and any combination thereof. In an example embodiment, a computer program product, embodied on a non-transitory computer readable medium, may be configured to control a processor to perform a process comprising the embodiments described above and any combination thereof.

In an example embodiment, an apparatus, like apparatus 132 of FIGURE 1, or a device controlling functioning thereof, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some example embodiments find industrial application in communication networks, for example in cellular communication networks, such as 3GPP networks.

### ACRONYMS LIST

- 3GPP: 3^{rd} Generation Partnership Project
- ADBC: Associated Density Based Clustering
- AI: Artificial Intelligence
- BS: Base Station
- DBSCAN: Density-Based Spatial Clustering of Applications with Noise
- LTE: Long Term Evolution
- NR: New Radio
- RAT: Radio Access Technology
- UE: User Equipment
- WiMAX: Worldwide Interoperability for Microwave Access
- WLAN: Wireless Local Area Network

**REFERENCE SIGNS LIST**

| | |
|---|---|
| 110 | User Equipment |
| 115 | Air interface |
| 120 | Base station |
| 125, 135 | Wired interfaces |
| 130 | Core network |
| 132 | Apparatus |
| 140 | Another apparatus |
| 210 | Clustering algorithm |
| 220 | Data point |
| 230 | Cluster |
| 240, 340 | Co-association matrix |
| 250 | Distance matrix |
| 260 | Density based clustering algorithm |
| 270 | Attack cluster |
| 310, 320, 330 | Clustering matrices |
| 312 - 318, 322 - 326, 332 - 336 | Elements of clustering matrices |
| 340 | Co-association matrix |
| 342 - 346 | Elements of the co-association matrix |
| 410 | Distance matrix |
| 412-416 | Elements of the co-association matrix |
| 500- 550 | Structure of the apparatus of FIGURE 5 |
| 610 - 680 | Phases of the method in FIGURE 6 |

### TECHNICAL CLAUSES:

Clause 1. An apparatus comprising at least one processing core, at least one memory including computer program code, the at least one memory and the computer program code being configured to, with the at least one processing core, cause the apparatus at least to:
   - receive input data comprising data points;
   - apply N initial clustering algorithms at least to a subset of said data points to generate N initial clustering matrices;
   - generate a co-association matrix from the N initial clustering matrices;
   - generate a distance matrix from the co-association matrix;
   - apply a density based clustering algorithm to the distance matrix to generate data clusters;
   - determine a subset of the generated data clusters as anomalous clusters, wherein at least some of the data points in each anomalous cluster are anomalous data points; and
   - perform at least one action based on the anomalous clusters.
Clause 2. The apparatus according to clause 1, wherein each element of the N initial clustering matrices denotes whether data points associated with said element are in the same initial cluster.
Clause 3. The apparatus according to clause 1 or clause 2, wherein the co-association matrix is generated by calculating a mean of each corresponding element of the N initial clustering matrices.
Clause 4. The apparatus according to any of the preceding clauses, wherein the distance matrix is generated from the co-association matrix by subtracting a value of each element of the co-association matrix from 1.
Clause 5. The apparatus according to any of the preceding clauses, wherein the density based clustering algorithm is a Density-Based Spatial Clustering of Applications with Noise, DBSCAN.
Clause 6. The apparatus according to any of the preceding clauses, wherein the at least one memory and the computer program code are further configured to, with the at least one processing core, cause the apparatus at least to:
   - determine that an anomalous cluster of one data point is the same as an anomalous cluster of another data point upon determining that an initial cluster of said one data point is the same as an initial cluster of said another data point.
Clause 7. The apparatus according to any of the preceding clauses, wherein the at least one memory and the computer program code are further configured to, with the at least one processing core, cause the apparatus at least to:
   - determine that a data cluster of one data point is the same as a data cluster of another data point upon determining that an initial cluster of said one data point is the same as an initial cluster of said another data point.
Clause 8. The apparatus according to any of the preceding clauses, wherein the N initial clustering algorithms are different.
Clause 9. The apparatus according to any of clauses 1 to 7, wherein at least two of the N initial clustering algorithms are the same and the at least two of the N initial clustering algorithms have at least one different parameter.
Clause 10. The apparatus according to any of the preceding clauses, wherein the N initial clustering algorithms are unsupervised clustering algorithms.
Clause 11. The apparatus according to any of the preceding clauses, wherein said performing the at least one action based on the anomalous clusters comprises providing data points of at least one of the anomalous clusters to a human operator and/or to an algorithm for further analysis.
Clause 12. The apparatus according to clause 11, wherein said providing the data points of at least one of the anomalous clusters to the human operator comprises presenting the anomalous clusters and/or the anomalous data points on a Graphical User Interface, GUI.
Clause 13. The apparatus according to any of the preceding clauses, wherein each data point corresponds to properties of a network packet in received network traffic, and each anomalous cluster comprises unknown network traffic.
Clause 14. The apparatus according to clause 13 depending on clause 11 or clause 12, wherein said further analysis by the algorithm comprises determining for each anomalous cluster of unknown network traffic, whether said anomalous cluster comprises data points associated with a network attack or not.
Clause 15. The apparatus according to clause 14, wherein said determining comprises performing for each anomalous cluster of unknown network traffic and the at least one memory and the computer program code are further configured to, with the at least one processing core, cause the apparatus at least to:
   - determine an attack type for each data point in an anomalous cluster, wherein the attack type is either a type of malicious network traffic or none for benign network traffic;
   - determine a number of data points corresponding to each attack type;
   - determine an attack type with a highest number of data points as a majority attack type; and
   - determinie that the anomalous cluster is a network attack cluster in response to the majority attack type being of some other type than none.
Clause 16. The apparatus according to clause 15, wherein
   - at least one definition of an attack type is pre-defined and stored to the apparatus; wherein
   - determining an attack type for each data point in an anomalous cluster comprises comparing a data point to the at least one stored definition of an attack type; wherein
   - an attack type other than none is determined in response to finding a matching comparison between the data point and a definition of an attack type; wherein
   - an attack type of none is determined in response to not finding a matching comparison between the data point and any of the stored definitions of an attack type; and wherein
   - the definition of an attack type comprises values or values ranges for at least one of the following parameters:
      ∘ source Internet Protocol, IP, address;
      ∘ destination IP address;
      ∘ IP packet size;
      ∘ destination Transmission Control Protocol, TCP, port number;
      ∘ destination User Datagram Protocol, UDP, port number; or
      ∘ inter-packet interval of IP packets received from the same source IP address.
Clause 17. The apparatus according to clause 16, wherein the inter-packet interval is measured in microseconds as a rolling average over the latest 100 packets received from the same IP address.
Clause 18. The apparatus according to clause 16 or 17, wherein the parameters in the definition of an attack type are provided in an executable script, and wherein comparing a data point to the definition of an attack type is performed by executing the script.
Clause 19. The apparatus according to any of clauses 16 or 18, wherein the definitions of attack types stored to the apparatus are periodically updated by adding new attack types, removing attack types and/or changing the parameters of attack types.
Clause 20. The apparatus according to any of clauses 15 to 19, wherein determining the number of data points corresponding to each attack type comprises using a voting algorithm for filtering out attack types of a lower proportion than a threshold value.
Clause 21. The apparatus according to clause 20, wherein the voting algorithm is Generalized Boyer-Moore Majority Vote algorithm.
Clause 22. The apparatus according to any of clauses 15 to 21, wherein said performing the at least one action based on the anomalous clusters comprises dropping packets coming from a same source address as packets comprising data points of the anomalous clusters determined as network attack clusters.
Clause 23. The apparatus according to any of clauses 15 to 22, wherein said performing the at least one action based on the anomalous clusters comprises dropping packets having a same size as packets comprising data points of the anomalous clusters determined as network attack clusters.
Clause 24. A method, comprising:
   - receiving input data comprising data points;
   - applying *N* initial clustering algorithms at least to a subset of said data points to generate *N* initial clustering matrices;
   - generating a co-association matrix from the *N* initial clustering matrices;
   - generating a distance matrix from the co-association matrix;
   - applying a density based clustering algorithm to the distance matrix to generate data clusters;
   - determining a subset of the generated data clusters as anomalous clusters, wherein at least some of the data points in each anomalous cluster are anomalous data points; and
   - performing at least one action based on the anomalous clusters.
Clause 25. An apparatus, comprising means for performing:
   - receiving input data comprising data points;
   - applying *N* initial clustering algorithms at least to a subset of said data points to generate *N* initial clustering matrices;
   - generating a co-association matrix from the *N* initial clustering matrices;
   - generating a distance matrix from the co-association matrix;
   - applying a density based clustering algorithm to the distance matrix to generate data clusters;
   - determining a subset of the generated data clusters as anomalous clusters, wherein at least some of the data points in each anomalous cluster are anomalous data points; and
   - performing at least one action based on the anomalous clusters.
Clause 26. The apparatus according to clause 25, wherein the means comprises at least one processor; and at least one memory including computer program code, the at least one memory and computer program code configured to, with the at least one processor, cause the performance of the apparatus.
Clause 27. A non-transitory computer readable medium having stored thereon a set of computer readable instructions that, when executed by at least one processor, cause an apparatus to at least perform:
   - receiving input data comprising data points;
   - applying *N* initial clustering algorithms at least to a subset of said data points to generate *N* initial clustering matrices;
   - generating a co-association matrix from the *N* initial clustering matrices;
   - generating a distance matrix from the co-association matrix;
   - applying a density based clustering algorithm to the distance matrix to generate data clusters;
   - determining a subset of the generated data clusters as anomalous clusters, wherein at least some of the data points in each anomalous cluster are anomalous data points; and
   - performing at least one action based on the anomalous clusters.
Clause 28. A computer program comprising instructions which, when the program is executed by an apparatus, cause the apparatus to carry out:
   - receiving input data comprising data points;
   - applying *N* initial clustering algorithms at least to a subset of said data points to generate N initial clustering matrices;
   - generating a co-association matrix from the *N* initial clustering matrices;
   - generating a distance matrix from the co-association matrix;
   - applying a density based clustering algorithm to the distance matrix to generate data clusters;
   - determining a subset of the generated data clusters as anomalous clusters, wherein at least some of the data points in each anomalous cluster are anomalous data points; and
   - performing at least one action based on the anomalous clusters.

## Claims

1. An apparatus, comprising means for performing:
- receiving (610) input data comprising data points;
- applying (620) *N* initial clustering algorithms at least to a subset of said data points to generate *N* initial clustering matrices;
- generating (630) a co-association matrix from the *N* initial clustering matrices;
- generating (640) a distance matrix from the co-association matrix;
- applying (650) a density based clustering algorithm to the distance matrix to generate data clusters;
- determining (660) a subset of the generated data clusters as anomalous clusters, wherein at least some of the data points in each anomalous cluster are anomalous data points; and
- performing (670) at least one action based on the anomalous clusters.

2. The apparatus according to claim 1, wherein each element of the *N* initial clustering matrices denotes whether data points associated with said element are in the same initial cluster.

3. The apparatus according to claim 1 or claim 2, wherein the co-association matrix is generated by calculating a mean of each corresponding element of the *N* initial clustering matrices.

4. The apparatus according to any of the preceding claims, wherein the distance matrix is generated from the co-association matrix by subtracting a value of each element of the co-association matrix from 1.

5. The apparatus according to any of the preceding claims, wherein the density based clustering algorithm is a Density-Based Spatial Clustering of Applications with Noise, DBSCAN.

6. The apparatus according to any of the preceding claims, wherein said performing the at least one action based on the anomalous clusters comprises providing data points of at least one of the anomalous clusters to a human operator and/or to an algorithm for further analysis.

7. The apparatus according to claim 6, wherein said providing the data points of at least one of the anomalous clusters to the human operator comprises presenting the anomalous clusters and/or the anomalous data points on a Graphical User Interface, GUI.

8. The apparatus according to any of the preceding claims, wherein each data point corresponds to properties of a network packet in received network traffic, and each anomalous cluster comprises unknown network traffic.

9. The apparatus according to claim 8 depending on claim 6 or claim 7, wherein said further analysis by the algorithm comprises determining for each anomalous cluster of unknown network traffic, whether said anomalous cluster comprises data points associated with a network attack or not.

10. The apparatus according to claim 9, wherein said determining comprises performing for each anomalous cluster of unknown network traffic:
- determining an attack type for each data point in an anomalous cluster, wherein the attack type is either a type of malicious network traffic or none for benign network traffic;
- determining a number of data points corresponding to each attack type;
- determining an attack type with a highest number of data points as a majority attack type; and
- determining that the anomalous cluster is a network attack cluster in response to the majority attack type being of some other type than none.

11. The apparatus according to claim 10, wherein
- at least one definition of an attack type is pre-defined and stored to the apparatus; wherein
- determining an attack type for each data point in an anomalous cluster comprises comparing a data point to the at least one stored definition of an attack type; wherein
- an attack type other than none is determined in response to finding a matching comparison between the data point and a definition of an attack type; wherein
- an attack type of none is determined in response to not finding a matching comparison between the data point and any of the stored definitions of an attack type; and wherein
- the definition of an attack type comprises values or values ranges for at least one of the following parameters:
∘ source Internet Protocol, IP, address;
∘ destination IP address;
∘ IP packet size;
∘ destination Transmission Control Protocol, TCP, port number;
∘ destination User Datagram Protocol, UDP, port number; or
∘ inter-packet interval of IP packets received from the same source IP address.

12. The apparatus according to claim 10 or claim 11, wherein said performing the at least one action based on the anomalous clusters comprises dropping packets coming from a same source address as packets comprising data points of the anomalous clusters determined as network attack clusters.

13. The apparatus according to any of the preceding claims, wherein the means comprises at least one processor; and at least one memory including computer program code, the at least one memory and computer program code configured to, with the at least one processor, cause the performance of the apparatus.

14. A method, comprising:
- receiving (610) input data comprising data points;
- applying (620) N initial clustering algorithms at least to a subset of said data points to generate *N* initial clustering matrices;
- generating (630) a co-association matrix from the N initial clustering matrices;
- generating (640) a distance matrix from the co-association matrix;
- applying (650) a density based clustering algorithm to the distance matrix to generate data clusters;
- determining (660) a subset of the generated data clusters as anomalous clusters, wherein at least some of the data points in each anomalous cluster are anomalous data points; and
- performing (670) at least one action based on the anomalous clusters.

15. A computer program comprising instructions which, when the program is executed by an apparatus, cause the apparatus to carry out:
- receiving (610) input data comprising data points;
- applying (620) N initial clustering algorithms at least to a subset of said data points to generate *N* initial clustering matrices;
- generating (630) a co-association matrix from the N initial clustering matrices;
- generating (640) a distance matrix from the co-association matrix;
- applying (650) a density based clustering algorithm to the distance matrix to generate data clusters;
- determining (660) a subset of the generated data clusters as anomalous clusters, wherein at least some of the data points in each anomalous cluster are anomalous data points; and
- performing (670) at least one action based on the anomalous clusters.
